# EUROPEAN PATENT SPECIFICATION

(11) **EP 1 442 924 B1**
(45) Date of publication and mention of the grant of the patent: **26.11.2008**
(21) Application number: 03445017.1
(22) Date of filing: 29.01.2003
(51) Int. Cl.: B60N 2/28

(54) **Booster cushion**
Zusatzsitz
Siège réhausseur

(43) Date of publication of application: 04.08.2004
(73) Proprietor: Ford Global Technologies, Inc., Dearborn, MI 48126 (US)
(72) Inventor: Kihlberg, Rasmus, 414 68 Göteborg (SE); Almqvist, Lars, 427 34 Billdal (SE)
(74) Representative: Andersson, Per Rune

(56) References cited:
- EP-A- 1 273 475
- DE-A- 3 020 212
- US-A- 5 125 717
- US-A- 5 332 286
- US-A- 6 053 569
- US-A1- 2001 000 638

## Description

### TECHNICAL FIELD:

The invention relates to a vehicular booster cushion according to the preamble of claim 1 (see, for example, US-A-5 125 717).

### BACKGROUND ART:

In the field of motor vehicles, there has been a steady development of various types of interior fittings and equipment for the safety and comfort of the occupants of a vehicle.

Especially, concerning child safety, many types of safety seats and cots for children have been developed. Since a child grows quite quickly from birth to early teenage, many kinds of safety devices are necessary during this period. A newly born child does not sit upright in a chair, but is lying in a cot or cradle which is secured to a permanent vehicle seat when the child is transported in the vehicle. Various types of cots or cradles are available for this purpose.

When the child's age has reached approximately 9 months, it can sit upright and special safety seats are used for children of this age. These safety seats are provided with their own safety straps or seat belts and are normally positioned in such a way that the child sitting in the seat has its back facing towards the direction of travel, i.e. the seat is secured to a permanent vehicle seat in such a way that the child sitting in the seat is facing the rear of the vehicle. In a manner which is previously known, the vehicle's permanent seat belt is used for mounting the child's safety seat to said permanent seat.

Furthermore, it can be suitable to turn a safety seat of this type so that the child faces the forward direction of travel when the child is 3-4 years.

When the child's age has reached approximately 4-5 years, the safety seats mentioned above are too small to accommodate the child in a safe and comfortable way. At this age, special booster cushions are used, enabling the child to be seated slightly higher than the seat surface so that a permanent seat belt mounted in the vehicle can be used by the child. As the child grows, different sizes of the booster cushions must be used in order to provide the correct belt geometry for the child. More precisely, the aim is to lift the child to get the shoulder part of the seat belt correctly placed on the child's shoulder. Also, the booster cushion is used so as to hold the lap part of the seat belt in a correct position. In this manner, a situation in which the child slides under the belt in a collision situation (so-called "submarining") can be avoided. The latter function may be accomplished by means of belt guides, as shown in U.S. patent publication no. US 2001/0000638 A1.

Later, when the child has reached adult size, no kind of special equipment is needed, and the normal safety arrangements in the vehicle are sufficient.

In the patent document GB 2256364 A, a child safety seat arrangement is disclosed. The seat is of a convertible type which is first arranged to work as a cot, then as a safety seat provided with its own safety straps. Finally, it may be arranged to work as a booster cushion.

The booster cushion described in GB 2256364 is however only suitable for a small child. As a child grows from 3-4 years of age to about 10 years of age, the booster cushion will have to be replaced in order to maintain correct belt geometry. This is obviously a disadvantage since it is costly to replace a booster cushion suitable for a small child with a new booster cushion as the child grows up.

The booster cushion in said US-A-5 125 717 is double-sided, providing different seating heights depending on which seat surface that is used. Safety belt guides are positioned on both sides, having functionality independently of which seat surface that is used.

### DISCLOSURE OF INVENTION:

It is an object of the present invention to provide an improved booster cushion, which can be used in a safe manner by children of different sizes.

The above-mentioned objects are accomplished by means of a booster cushion according to claim 1.

By means of the invention, certain advantages are obtained. Firstly, it can be noted that the same booster cushion can be used in a safe manner for children between the approximate age of 3-10 years, which is an advantage as regards the cost for the owner of the cushion. Also, the invention is practical since it can be used by several children (of different height) for example in the same family.

### BRIEF DESCRIPTION OF DRAWINGS:

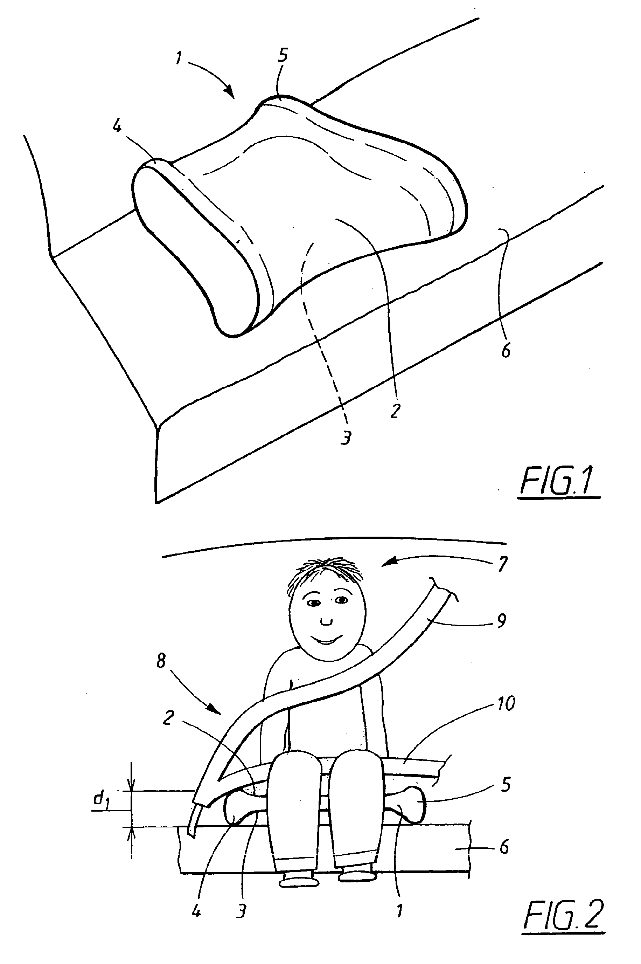

In the following text, the invention will be described in detail with reference to the attached drawings. These drawings, wherein Figs. 1 to 7 show only part or known parts of the features of the invention, are used for illustration only and do not in any way limit the scope thereof. In the drawings:
- Figure 1: shows a schematic perspective view of a booster cushion;
- Figure 2: shows a child using said booster cushion;
- Figure 3a: shows a front view of a booster cushion, in a first position;
- Figure 3b: shows a front view of the booster cushion of Figure 3a, but in a second position;
- Figure 4: shows a schematic perspective view of a booster cushion equipped with belt guides;
- Figure 5: shows a schematic perspective view of a booster cushion which is equipped with belt guides that are pivotally arranged;
- Figure 6: shows a side view of the booster cushion shown in Figure 5;
- Figure 7: shows a front view of the booster cushion in Figure 5;
- Figure 8: shows a schematic perspective view of a booster cushion, according to the invention, equipped with belt guides that are slidably arranged; and
- Figure 9: shows a front view of the booster cushion in Figure 8.

### PREFERRED EMBODIMENTS:

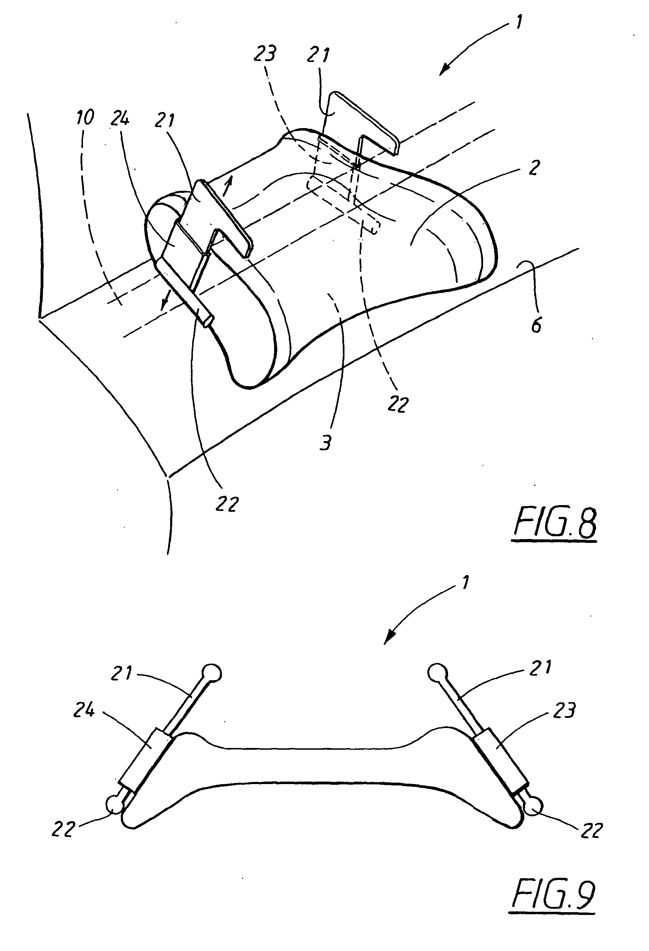

In the following, an embodiment of the present invention as illustrated by way of example in Figs. 8 and 9 will be described in detail. With reference to Figure 1, there is shown a booster cushion 1 which is intended for use in a vehicle, for example a private car, in order to provide the correct belt geometry for a child from the approximate age 3-4 years and up to approximately 10 years. Figure 1 shows the booster cushion 1 in its most general form, having a first, top sitting surface 2 and a second, bottom sitting surface 3, which sitting surfaces are placed on opposite sides of the booster cushion 1. The booster cushion 1 is also provided with two side sections 4, 5 which are intented to rest against another surface, suitably in the form of a conventional vehicle seat. Such a vehicle seat is indicated by means of reference numeral 6 in Figure 1.

As will be described in greater detail below, the present invention (which is defined in claim 1) relies on the general principle that the booster cushion 1 can be placed in either one of two positions, i.e. a first position (shown in Figure 1) using the first sitting surface 2 as an upper surface on which a user may sit, or a second position by simply turning the booster cushion 1 so that the second sitting surface 3 defines an upper surface on which a user may sit. Depending on which position is chosen, a distance will be defined between the plane defined by the vehicle seat 6 and the first sitting surface 2 or second sitting surface 3. Also, the two surfaces 2, 3 extend along two generally parallel planes which are also generally parallel to the plane defined by the upper surface of the vehicle seat 6.

According to one feature of the invention said distances differ from each other, so that the same booster cushion 1 can be used for users of a first height when using the first sitting surface 2 as a top surface, and for users of a second height when using the second sitting surface 3 as a top surface. The choice of switching from using either the first or second sitting surface as a sitting surface is done by simply turning the booster cushion 1 upside down.

In Figure 2, a child 7 is shown using said booster cushion 1, which in turn is placed on a permanent vehicle seat 6, for example the rear seat of a conventional car. In a known manner, the vehicle is provided with a conventional, permanently mounted vehicle seat belt 8 to be used by the child 7 sitting in the vehicle seat 6. The seat belt 8 has a shoulder part 9 and a lap part 10.

As shown in Figure 2, the booster cushion 1 is arranged so that its first sitting surface 2 is used as an upper surface on which the child sits. In this manner, the first sitting surface 2 defines a distance d₁ to the upper surface of the vehicle seat 6 which is suitable for raising the child 7 to a height which is necessary with respect to the position of the seat belt 8. This means that the child 8 is now given the most optimal protection by means of the seat belt 8.

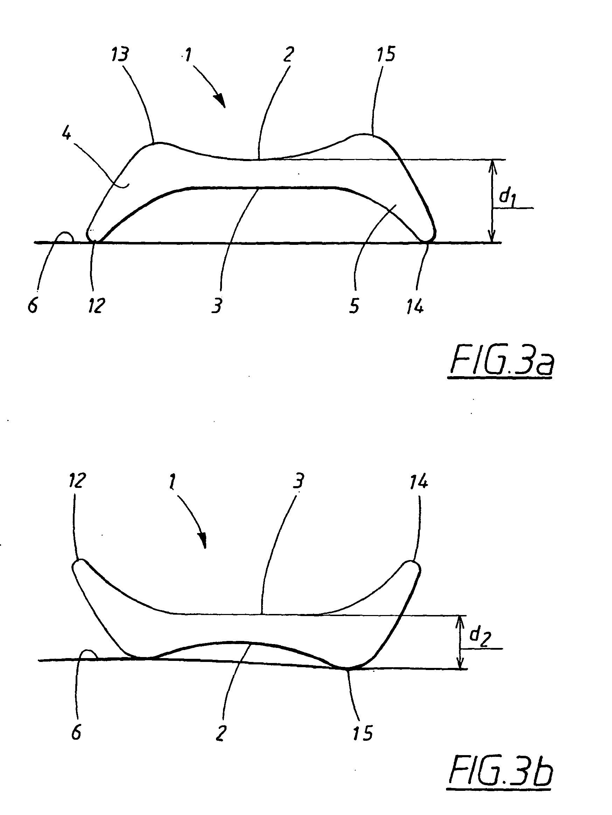

Assuming that the booster cushion 1 was to be used by another, taller child, the booster cushion 1 could be used in an upside down position, i.e. a second operational position wherein the second sitting surface 3 would be used as a sitting surface for the child in question. This will now be explained in greater detail with reference to Figures 3a and 3b, which show embodiment of a booster cushion 1 in a first position and a second position, respectively.

Figure 3a indicates that the booster cushion 1 is shaped in such a way that the above-mentioned first distance d₁ is defined with respect to the upper surface of the vehicle seat 6. In a similar manner, Figure 3b indicates that the booster cushion 1 is shaped so that a second distance d₂ is defined with respect to the upper surface of the vehicle seat 6. In this manner, a option between a sitting height corresponding to the distance d₁ or d₂ is provided depending on which one of the sitting surfaces 2, 3 that is positioned to face upwards. Two different vertical positions of the booster cushion 1 with respect to the mounting position of the seat belt of the vehicle are provided. First, according to Figure 3a, when the first sitting surface 2 is positioned to face upwards, the first distance d₁ is used, lifting the child to a first vertical position with respect to the mounting position of the seat belt of the vehicle. Furthermore, the booster cushion 1 is turned in such a way that the second sitting surface 3 is positioned to face upwards, as shown in Figure 3b. Then the second distance d₂ is used, lifting the child to a second vertical position with respect to the mounting positions of the seat belt of the vehicle. The second distance d₂ of the booster cushion is less than the first distance d₁, which means that the position shown in Figure 3b is more suitable for taller children than the position shown in Figure 3a.

With reference to Figure 3a, the booster cushion 1 is designed in such a manner that it comprises the above-mentioned side sections 4, 5, i.e. a first side section 4 and a second side section 5, which are positioned on each side of a central section defining the first sitting surface 2 and the second sitting surface 3. The first side section 4 comprises a first resting surface 12 and a second resting surface 13. In a similar manner, the second side section 5 comprises a first resting surface 14 and a second resting surface 15. The first resting surfaces 12, 14 are intended to rest on the vehicle seat 6 when the cushion 1 is positioned as shown in Figure 3a, whereas the second resting surfaces 13, 15 are intended to rest against the vehicle seat 6 when the cushion 1 is positioned as shown in Figure 3b. This means that the first distance d₁ corresponds to a distance between the first sitting surface 2 and the first resting surfaces 12, 14, in a direction generally perpendicular to the vehicle seat 6 surface, whereas the second distance d₂ corresponds to a distance between the second sitting surface 3 and the second resting surfaces 13, 15, also in a direction generally perpendicular to the vehicle seat 6 surface.

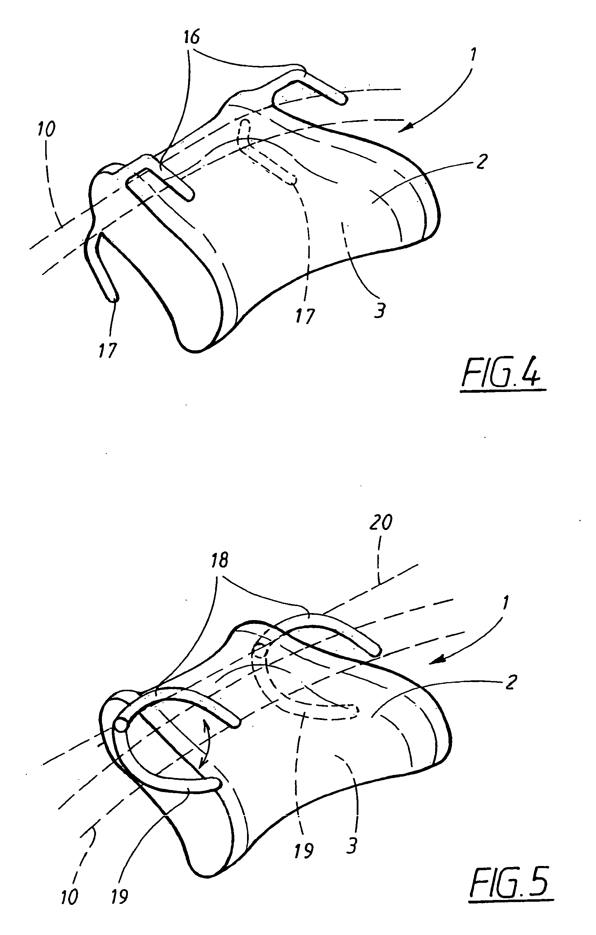

As shown in Figure 4, the booster cushion 1 is equipped with two belt guide pairs 16, 17 for receiving the lap part 10 (see also Figure 2) of a seat belt. The lap part 10 is indicated with broken lines in Figure 4. More precisely, the booster cushion 1 comprises a first pair of belt guides 16 which are formed as hooks or similar protrusions, which are positioned on each one of the side sections 4, 5 and are intended to be used when a person sits on the first sitting surface 2. The booster cushion 1 also comprises a second pair of belt guides 17 being formed in the same manner as the first part of belt guides 16 and being intended to be used when the booster cushion 1 is turned upside down and a person sits on the second sitting surface 3. The intention of the belt guides 16, 17 is to guide the lap part 10 of the seat belt in a proper way, preventing the child sitting on the booster cushion 1 to slide under the lap part 10 of the seat belt in the event of a collision. In this manner, a high degree of safety is provided for the child.

As further shown in Figure 5, the booster cushion 1 is provided with an alternative set of belt guides in the form of two pairs of slightly curved elements 18, 19 which in this case are arranged on the sides of the booster cushion 1 and are pivotally arranged around an imaginary axis 20 extending generally transverse to the longitudinal direction of the booster cushion 1. The curved elements 18, 19 can be pivoted as indicated by means of an arrow in Figure 5. Thus, the first pair of belt guides 18 that corresponds to the first sitting surface 2 that is facing upwards as seen in Figure 5 is positioned correctly so that a lap part 10 of a seat belt can be positioned in a safe manner with reference to a child sitting on the booster cushion 1. The second pair of belt guides 19, which belongs to the second sitting surface 3 that is facing downwards, has been positioned is such a way that it is resting on the surface of the vehicle seat (not shown in Figure 5) at generally the same level as the first end surfaces 12, 14 as shown in Figure 3a. When the booster cushion 1 is turned in such a way that the second sitting surface 3 is positioned to face upwards (not shown), the first and second pair of belt guides 18, 19 rotate around the axis 20 in such a way that the second pair of belt guides 19 that corresponds to the second sitting surface 3 is positioned correctly so as to receive said lap part 10. The first pair of belt guides 18, which corresponds to the first sitting surface 2 that now is facing downwards, has been positioned in such a way that it is resting on the sitting surface of the vehicle seat, thus not interfering with the vertical thickness or sitting comfort of the booster cushion 1.

It can consequently be noted that the belt guides 18, 19 as shown in Figure 5 can be adapted in a suitable way so as to receive the lap part 10 of the seat belt. In this manner, the seat belt can be used in a safe manner by an occupant using the booster cushion 1.

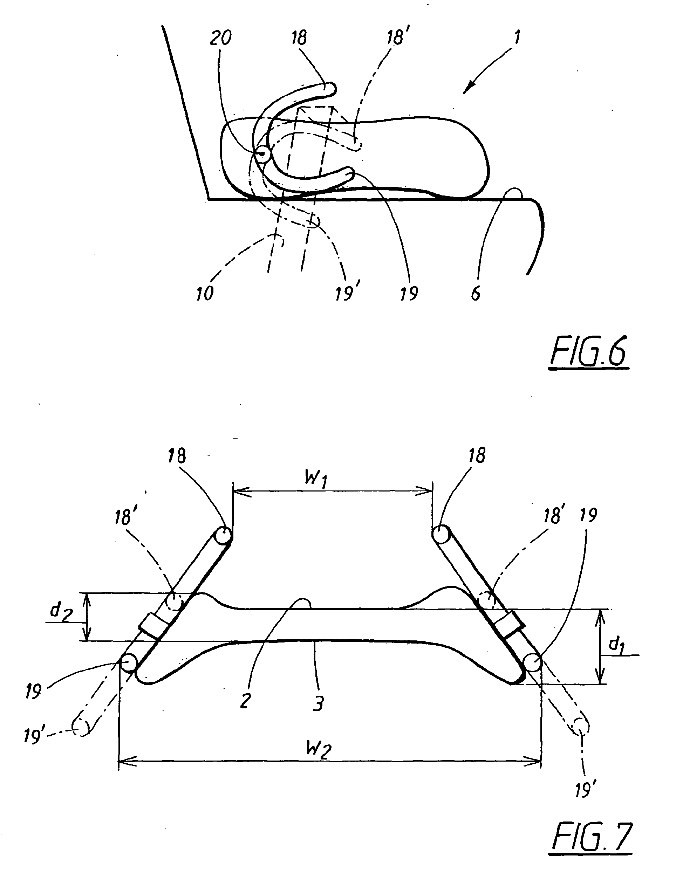

Figure 6 shows a side view of the booster cushion 1 as shown in Figure 5. It can be noted that the belt guides 18, 19 are preferably interconnected so that the positioning of each lower belt guide 19 determines the position of the corresponding upper belt guide 18. More precisely, when the booster cushion 1 is positioned on a vehicle seat 6, the lower belt guide 19 will rest upon the surface of the vehicle seat 6. Due to the fact that the belt guides 18, 19 are pivotally arranged about the axis 20, the upper belt guide 18 will be forced to an upper position in which a lap part 10 of a seat belt can be positioned inside the upper belt guide 18 as indicated by means of broken lines. In a corresponding manner, when the booster cushion 1 is turned upside down as described above, the belt guides 18, 19 will be changed to the position which is indicated with reference numerals 18', 19', respectively, and broken lines.

In Figure 7, a front view of the booster cushion in Figures 5 and 6 is shown. The full and broken lines as shown in Figure 6, and which indicate the two positions of the belt guides 18, 19, are also indicated in Figure 7. Furthermore, Figure 7 teaches that the belt guides 18, 19 are inclined in such a way that the adaptation to the child's size is not only in height, but in width as well. In Figure 7, the booster cushion 1 is turned in such a way that the first sitting surface 2 is positioned to face upwards. The first vertical distance d₁ is thus used, lifting the child to a first vertical position with respect to the vehicle seat and the mounting positions of the seat belt of the vehicle. As the first distance d₁ is greater than the second distance d₂, this position is suited for a smaller child than the position where the second distance d₂ is used. It is also evident that this position is not only suitable for a child that is smaller in height, but smaller in width as well due to the inclination of the belt guides 18, 19. With reference to Figure 7, it can be noted that the distance between the upper portions of the first pair of belt guides 18 can be said to define a width w₁ therebetween. In the operational position shown, the cushion 1 is suitable for a child of relatively small body size. This means that the belt guides 18 will be placed relatively closely to the user's body, so that the seat belt may give optimal protection. When the cushion 1 is in its second operational position, i.e. with the cushion 1 being turned and the user sitting on the second sitting surface 3, the end portions of each of the second pair of belt guides 19' define a second width w₂ therebetween. In such a second operational position, the cushion 1 is suitable for a child having a larger body size, the second pair of belt guides 19' being positioned relatively closely to the user's body.

When the child grows and the booster cushion is turned (not shown) in order to use the second distance d₂, which is suitable for a larger child, this position is not only adjusted for a child that is larger in height, but larger in width as well due to the inclination of the belt guides 18, 19.

In the embodiment according to the invention, shown in Figure 8, the booster cushion 1 comprises belt guides 21, 22 which are slidably arranged. More precisely, the belt guides 21, 22 are arranged on each side of the booster cushion 1 in a manner so that they may slide in a generally vertical direction as indicated by means of arrows in Figure 8. This sliding motion is obtained by providing holding devices 23, 24 mounted on each side of the booster cushion 1. Thus, the first belt guides 21 which are used when the first sitting surface 2 is used protrude upwards in a manner so that they may receive the lap part 10 of a vehicle seat belt. The second pair of belt guides 22, which are used when the second sitting surface 3 is used, have been positioned is such a way that they are resting on the surface of the vehicle seat 6. When the booster cushion 1 is turned in such a way that the second sitting surface 3 is positioned to face upwards (not shown), the first and second pair of belt guides 21, 22 slide in their holders 23, 24, respectively, in such a way that the second pair of belt guides 22 that corresponds to the second sitting surface 3 being used is facing upwards so as to receive the lap part 10. The first pair of belt guides 21, which belongs to the first sitting surface 2 that now is facing downwards, has been positioned is such a way that it is resting on the sitting surface of the vehicle seat 6.

In Figure 9, a front view of the booster cushion 1 in Figure 8 is shown. Here it is shown that the belt guides 21, 22 are inclined in such a way that the adaptation to the child's size is not only in height, but in width as well. This adaptation works in the same manner as described above for the booster cushion with belt guides that are pivotally arranged, as shown in Figure 7. The principle shown in Figures 7 and 8, involving inclining belt guides defining a first width w₁ and a second width w₂ (see in particular Figure 7) can be implemented also in the embodiment shown in Figure 4.

The invention is not limited to the embodiment described, but can be modified within the scope of the appended claims. For example, the booster cushion described may also be used for adults which are too small for using the permanent seat belts of the vehicle.

Finally, the present invention is not limited to use in vehicles such as private cars, but is also suitable for other types of vehicles, such as trucks and buses, and also aeroplanes.

## Claims

1. A vehicular seat booster cushion (1) for a permanent vehicle seat (6) and being provided with a first sitting surface (2) for accommodating an occupant (7) and a first resting surface (12; 14) adapted to be positioned on said seat (6) in a first position of said booster cushion (1), said first sitting surface (2) extending generally along a plane which is at a first distance (d₁) from said first resting surface (12; 14), where the booster cushion (1) is also provided with a second sitting surface (3) for accommodating an occupant and a second resting surface (13; 15) adapted to be positioned on said seat (6) in a second position of said booster cushion (1), said second sitting surface (3) extending generally along a plane which is at a second distance (d₂) from said second resting surface (13; 15), and wherein said first distance (d₁) and said second distance (d₂) are different, so as to be used by occupants (7) of different height, where the booster cushion (1) further is equipped with first belt guide means (16; 18; 21) for receiving a lap portion (10) of a seat belt (8) which is intended to be used when said occupant (7) sits on the first sitting surface (2), and second belt guide means (17; 19; 22) for receiving said lap portion (10) when said occupant (7) sits on the second sitting surface (3), **characterized in that** said first and second belt guide means (21, 22) are arranged to be slidably fastened to the booster cushion (1) enabling said first belt guide means (21) to slide in a generally vertical direction into a first operational position for receiving said lap portion (10) when said occupant (7) sits on the first sitting surface (2) and enabling said second belt guide means (22) to slide into a further operational position for receiving said lap portion (10) when said occupant (7) sits on the second sitting surface (3).

2. Booster cushion (1) according to claim 1, **characterized in that** said belt guides (16; 18; 21; 17; 19, 22) are arranged on each side of said cushion (1) in an inclined manner so as to define a width (w₁; w₂) therebetween when they are in their respective operational position, said width being less when said first sitting surface (2) is used than when said second sitting surface (3) is used.

## Patentansprüche

1. Fahrzeugsitzerhöhung (1) für einen Dauerfahrzeugsitz (6) und versehen mit einer ersten Sitzfläche (2) zum Unterbringen eines Insassen (7) und einer ersten Auflagefläche (12; 14), die geeignet ist, auf dem Sitz (6) in einer ersten Position der Sitzerhöhung (1) positioniert zu sein, wobei sich die erste Sitzfläche (2) allgemein entlang einer Ebene erstreckt, die einen ersten Abstand (d₁) von der ersten Auflagefläche (12; 14) hat, wobei die Sitzerhöhung (1) auch mit einer zweiten Sitzfläche (3) zum Unterbringen eines Insassen und einer zweiten Auflagefläche (13; 15) versehen ist, die geeignet ist, auf dem Sitz (6) in einer zweiten Position der Sitzerhöhung (1) positioniert zu sein, wobei sich die zweite Sitzfläche (3) allgemein entlang einer Ebene erstreckt, die einen zweiten Abstand (d₂) von der zweiten Auflagefläche (13; 15) hat, und wobei sich der erste Abstand (d1) und der zweite Abstand (d2) unterscheiden, um von Insassen (7) mit unterschiedlicher Höhe verwendet zu werden, wobei die Sitzerhöhung (1) ferner ausgestattet ist mit einer ersten Gurtführungseinrichtung (16; 18; 21) zum Aufnehmen eines Beckenabschnitts (10) eines Sicherheitsgurts (8), der verwendet werden soll, wenn der Insasse (7) auf der ersten Sitzfläche (2) sitzt, und einer zweiten Gurtführungseinrichtung (17; 19; 22) zum Aufnehmen des Beckenabschnitts (10), wenn der Insasse (7) auf der zweiten Sitzfläche (3) sitzt, **dadurch gekennzeichnet, daß** die erste und zweite Gurtführungseinrichtung (21, 22) so angeordnet sind, daß sie an der Sitzerhöhung (1) gleitfähig befestigt sind, was der ersten Gurtführungseinrichtung (21) ermöglicht, in einer allgemein senkrechten Richtung in eine erste Betriebsposition zum Aufnehmen des Beckenabschnitts (10) zu gleiten, wenn der Insasse (7) auf der ersten Sitzfläche (2) sitzt, und der zweiten Gurtführungseinrichtung (22) ermöglicht, in eine weitere Betriebsposition zum Aufnehmen des Beckenabschnitts (10) zu gleiten, wenn der Insasse (7) auf der zweiten Sitzfläche (3) sitzt.

2. Sitzerhöhung (1) nach Anspruch 1, **dadurch gekennzeichnet, daß** die Gurtführungen (16; 18; 21; 17; 19, 22) auf jeder Seite der Erhöhung (1) auf geneigte Weise so angeordnet sind, daß sie eine Breite (w₁; w₂) dazwischen bilden, wenn sie sich in ihrer jeweiligen Betriebsposition befinden, wobei die Breite bei Verwendung der ersten Sitzfläche (2) kleiner als bei Verwendung der zweiten Sitzfläche (3) ist.

## Revendications

1. Rehausseur de siège de sécurité pour enfant (1) de siège de véhicule, pour un siège de véhicule permanent (6) et étant doté d'une première surface d'assise (2) pour recevoir un occupant (7) et d'une première surface de repos (12 ; 14) adaptée pour être positionnée sur ledit siège (6) dans une première position dudit rehausseur de siège de sécurité pour enfant (1), ladite première surface d'assise (2) s'étendant généralement le long d'un plan qui est à une première distance (d₁) de ladite première surface de repos (12 ; 14), dans lequel le rehausseur de siège de sécurité pour enfant (1) est également doté d'une seconde surface d'assise (3) pour recevoir un occupant et d'une seconde surface de repos (13 ; 15), adapté pour être positionné sur ledit siège (6) dans une seconde position dudit rehausseur de siège de sécurité pour enfant (1), ladite seconde surface d'assise (3) s'étendant généralement le long d'un plan qui est à une seconde distance (d₂) de ladite seconde surface de repos (13 ; 15), et dans lequel ladite première distance (d₁) et ladite seconde distance (d₂) sont différentes, afin d'être utilisées par des occupants (7) de différente taille, dans lequel le rehausseur de siège de sécurité pour enfant (1) est en outre équipé de premiers moyens de guidage de ceinture (16 ; 18 ; 21) pour recevoir une partie ventrale (10) d'une ceinture de sécurité (8) qui est prévue pour être utilisée lorsque ledit occupant (7) est assis sur la première surface d'assise (2), et de seconds moyens de guidage de ceinture (17 ; 19 ; 22) pour recevoir ladite partie ventrale (10) lorsque ledit occupant (7) est assis sur la seconde surface d'assise (3), **caractérisé en ce que** lesdits premiers et seconds moyens de guidage de ceinture (21, 22) sont agencés pour être fixés de manière coulissante audit rehausseur de siège de sécurité pour enfant (1) permettant auxdits premiers moyens de guidage de ceinture (21) de coulisser dans une direction généralement verticale dans une première position opérationnelle pour recevoir ladite partie ventrale (10) lorsque ledit occupant (7) est assis sur la première surface d'assise (2) et permettre auxdits seconds moyens de guidage de ceinture (22) de coulisser dans une autre position opérationnelle pour recevoir ladite partie ventrale (10) lorsque ledit occupant (7) est assis sur la seconde surface d'assise (3).

2. Rehausseur de siège de sécurité pour enfant (1) selon la revendication 1, **caractérisé en ce que** lesdits guides de ceinture (16 ; 18 ; 21 ; 17 ; 19, 22) sont agencés de chaque côté dudit rehausseur (1) d'une manière inclinée afin de définir une largeur (w₁ ; w₂) entre eux lorsqu'ils sont dans leur position opérationnelle respective, ladite largeur étant plus petite lorsque ladite première surface d'assise (2) est utilisée que lorsque ladite seconde surface d'assise (3) est utilisée.
